(19) Europäisches Patentamt
European Patent Office
Office européen des brevets

(11) **EP 3 950 342 A1**

(12) **EUROPEAN PATENT APPLICATION**
published in accordance with Art. 153(4) EPC

(43) Date of publication:
**09.02.2022  Bulletin 2022/06**

(51) International Patent Classification (IPC):
**B32B 27/20** (2006.01)     **C08J 7/046** (2020.01)

(21) Application number: **20783969.7**

(52) Cooperative Patent Classification (CPC):
**B32B 27/20; C08J 7/04; C08J 7/046**

(22) Date of filing: **09.03.2020**

(86) International application number:
**PCT/JP2020/009900**

(87) International publication number:
**WO 2020/203062 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2019   JP 2019067262**

(71) Applicant: **Kimoto Co., Ltd.**
**Saitama 338-0013 (JP)**

(72) Inventors:
• **SUZUKI, Sho**
**Saitama-shi, Saitama 338-0013 (JP)**
• **KATO, Tatsuya**
**Saitama-shi, Saitama 338-0013 (JP)**
• **TACHIBANA, Kazutoshi**
**Saitama-shi, Saitama 338-0013 (JP)**

(74) Representative: **Strehl Schübel-Hopf & Partner**
**Maximilianstrasse 54**
**80538 München (DE)**

(54) **LAYERED FILM FOR MOLDING**

(57)    The present invention provides, for example, a laminated film for molding, which not only has a hard coating ability equal to or more than conventional one, but also is improved in shape followability of the entire laminated film. The laminated film for molding of the present invention includes at least a substrate film, a hard coating layer, and a functional layer in the listed order, in which the hard coating layer includes at least a resin and 1 to 50 parts by mass of an inorganic oxide particle based on 100 parts by mass of the entire resin component included in the hard coating layer.

[Figure 1]

**Description**

[Technical Field]

The present invention relates to a laminated film for use in molding.

[Background Art]

An insert molding method using a film with a hard coating layer laminated has been increasingly used for protecting or decorating, for example, a personal computer, mobile equipment, a mobile phone, an electronic organizer, or an in-vehicle display panel.
Patent Literature 1 describes, such a laminated film, a laminated film for molding, including a hard coating layer having a crack elongation of 5% or more and a low refractive index layer having a refractive index of 1.47 or less in the listed order on a substrate film.

[Citation List]

[Patent Literature]

[Patent Literature 1] Japanese Patent Laid-Open No. 2014-41244

[Summary of Invention]

[Technical Problem]

In recent years, shaping of a form having a curved surface small in radius of curvature has been particularly performed in film molding, and a laminated film used therefor has also been demanded to have not only hard coating ability such as scratch resistance, but also more excellent shape followability. Such shape followability (molding ability) of the laminated film can be evaluated by, for example, the percentage of elongation of the laminated film until cracking occurs in pulling of both ends of the laminated film (hereinafter, also simply referred to as "percentage of elongation").
It is preferable for allowing such a laminated film to exhibit excellent shape followability that a hard coating layer, a low refractive index layer, and the like laminated in the laminated film are excellent in elongation. However, it has been found that a hard coating layer, which is formed for the purpose of preventing a film surface from being scratched, thus is made of a relatively hard and brittle material and therefore there is room for improvement in terms of an enhancement in shape followability of the entire laminated film, in relation to other layer placed. For example, it has been found that a laminated film where a hard coating layer and an antireflection layer are placed on a substrate film can cause cracking to occur between the substrate film and the hard coating layer, between the hard coating layer and the antireflection layer, and the like and thus cannot exhibit a high percentage of elongation of the entire laminated film.
The present invention has been made in view of the above problems. In other words, an object of the present invention is to provide, for example, a laminated film for molding, which not only has a hard coating ability equal to or more than conventional one, but also is improved in shape followability of the entire laminated film.

[Solution to Problem]

The present inventors have made intensive studies about the formulation and various physical properties of a hard coating layer in order to solve the above problems, and as a result, have found that a functional layer can be provided on a predetermined hard coating layer to thereby allow excellent pencil hardness and scratch resistance, and an excellent percentage of elongation, and the like, of the entire laminated film to be simultaneously satisfied, leading to completion of the present invention.
That is, the present invention provides various specific aspects represented below.

(1) A laminated film for molding, comprising at least a substrate film, a hard coating layer, and a functional layer in the listed order, wherein
the hard coating layer comprises at least a resin and 1 to 50 parts by mass of an inorganic oxide particle based on 100 parts by mass of the entire resin component comprised in the hard coating layer.
(2) The laminated film for molding according to (1), wherein the inorganic oxide particle has an average particle size $D_{50}$ of 1 to 1500 nm.
(3) The laminated film for molding according to (1) or (2), wherein the hard coating layer has a thickness of 0.5 to 5 $\mu$m.

(4) The laminated film for molding according to any one of (1) to (3), wherein the inorganic oxide particle comprises one selected from the group consisting of an alumina particle and a silica particle.

(5) The laminated film for molding according to any one of (1) to (4), wherein the hard coating layer has a pencil hardness of HB or more (according to JIS K5600-5-4:1999, at a load of 750 g).

(6) The laminated film for molding according to any one of (1) to (5), wherein the substrate film, the hard coating layer, and the functional layer are laminated and disposed with no any other layer being interposed.

(7) The laminated film for molding according to any one of (1) to (6), wherein the functional layer comprises a resin.

(8) The laminated film for molding according to any one of (1) to (7), wherein the functional layer comprises 1 to 100% by mass of an inorganic oxide relative to all components comprised in the functional layer.

(9) The laminated film for molding according to any one of (1) to (8), wherein the functional layer has a thickness of 20 to 200 nm.

(10) The laminated film for molding according to any one of (1) to (9), wherein the functional layer is at least one selected from the group consisting of an antireflection layer, an antifouling layer, an antiglare layer, and a decorative layer.

(11) The laminated film for molding according to any one of (1) to (10), for use in film insert molding.

[Advantageous Effects of Invention]

According to the present invention, for example, there can be provided a laminated film for molding, which not only has a hard coating ability equal to or more than conventional one, but also is improved in shape followability of the entire laminated film.

[Brief Description of Drawing]

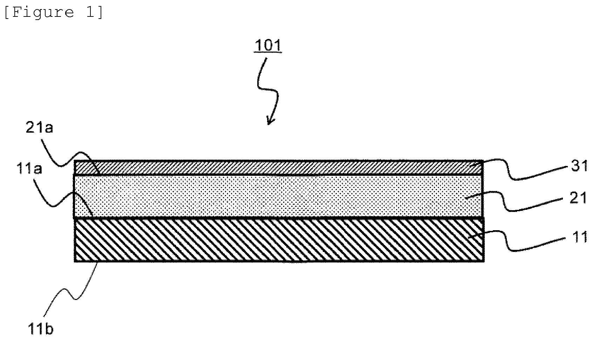

[Figure 1] A cross-sectional view schematically illustrating a laminated film 101 for molding of an embodiment.

[Description of Embodiments]

Hereinafter, embodiments of the present invention will be described in detail with reference to the drawings. It is noted that a positional relationship among the left, right, top and bottom is based on a positional relationship illustrated in the drawings, unless particularly noted. A dimensional ratio in the drawings is not limited by a ratio illustrated. Herein, the following embodiments are illustrative for describing the present invention, and the present invention is not limited thereto and can be arbitrarily modified and carried out without departing from the gist thereof. The designation of any numerical value range, for example, "1 to 100", herein includes both the lower limit value "1" and the upper limit value "100". The same applies to the designations of other numerical value ranges.

Figure 1 is a schematic cross-sectional view illustrating a main section of a laminated film 101 for molding of the present embodiment. The laminated film 101 for molding of the present embodiment includes a substrate film 11, a hard coating layer 21 provided on one surface 11a of the substrate film 11, and a functional layer 31 provided on one surface 21a of the hard coating layer 21. In other words, the laminated film 101 for molding has a laminated structure (three-layered structure) where the functional layer 31, the hard coating layer 21, and the substrate film 11 are at least arranged in the listed order. Any optional layer(s) such as a print layer, a pressure-sensitive adhesive layer, and/or a primer layer may be, if necessary, provided on the rear surface (other surface 11b of the substrate film 11) of the laminated film 101 for molding. Hereinafter, each component of the laminated film 101 for molding will be described in detail.

<Substrate film>

The substrate film 11 is not particularly limited in terms of the type thereof as long as it can support the hard coating layer 21 and the functional layer 31. A synthetic resin film is preferably used in the substrate film 11 from the viewpoint of, for example, dimension stability, mechanical strength, and weight saving. Examples of the synthetic resin film include a film formed from any of, for example, polyethylene terephthalate, polybutylene terephthalate, polyethylene naphthalate, polycarbonate, polyethylene, polypropylene, a cyclic olefin polymer, polystyrene, triacetyl cellulose, (meth)acrylic acid ester, polyvinyl chloride, and a fluororesin. Such a film can be used singly or in combinations of two or more kinds thereof. A laminated film as any combination thereof can also be suitably used. The concept "(meth)acrylic" herein encompasses both acrylic and methacrylic. In particular, the substrate film 11 here used is preferably any of a polyester film, a polyimide film, a polycarbonate film, a (meth)acrylic film, and a laminated film as any combination thereof, and is more preferably a polycarbonate film.

The appearance of the substrate film 11 may be any of transparent, semi-transparent, colorless, and colored, is not particularly limited, and is preferably one high in translucency. Specifically, the film is preferably a transparent resin film having a total light transmittance of 85% or more, more preferably 88% or more, further preferably 90% or more, particularly preferably 92% or more, as measured according to JIS K7361-1:1997. The substrate film 11 may be, if necessary, subjected to, for example, a plasma treatment, a corona discharge treatment, a far-ultraviolet irradiation treatment, and/or an anchor treatment. The substrate film 11 may contain an ultraviolet absorber and/or a light stabilizer.

The refractive index $n_0$ of the substrate film 11 is preferably 1.45 to 1.75, more preferably 1.50 to 1.75.

The thickness of the substrate film 11 can be appropriately set depending on required performance and application, is not particularly limited, and is generally 10 to 500 $\mu$m, preferably 100 to 400 $\mu$m, more preferably 150 to 300 $\mu$m.

<Hard coating layer>

The hard coating layer 21 is a coating film provided to increase surface hardness of the substrate film 11 and prevent scratches from occurring on the surface. The layer may also be provided for the purpose of an increase in surface smoothness of the substrate film 11. The hard coating layer 21 of the present embodiment, here used, is a hard coating film containing at least a resin and an inorganic oxide particle dispersed in the resin in order to allow the above-mentioned shape followability of the entire laminated film to be provided. While one where the hard coating layer 21 is provided on only one surface 11a of the substrate film 11 is exemplified in the present embodiment, the hard coating layer 21 may also be provided on other surface 11b (the lower in the drawing) of the substrate film 11.

(Resin)

Any known material can be used as the material constituting the hard coating layer 21, and the type thereof is not particularly limited. The material can be generally constituted from a cured product obtained by, for example, curing a curable resin composition containing at least a known resin such as a thermoplastic resin, a thermosetting resin, or an ionizing radiation-curable resin, and an inorganic oxide particle.

Examples of the thermoplastic resin and the thermosetting resin include a saturated or unsaturated polyester-based resin, a (meth)acrylic resin, a (meth)acrylic urethane-based resin, a polyester (meth)acrylate-based resin, a polyurethane (meth)acrylate-based resin, an epoxy (meth)acrylate-based resin, a urethane-based resin, an epoxy-based resin, a vinyl resin, a polycarbonate-based resin, a cellulose-based resin, an acetal-based resin, a polyethylene-based resin, a polystyrene-based resin, a polyamide-based resin, a polyimide-based resin, a melamine-based resin, a phenol-based resin, and a silicone-based resin, but not particularly limited thereto. Such a resin can be used singly or in combinations of two or more kinds thereof.

The ionizing radiation-curable resin here used can be, for example, a photopolymerizable prepolymer which is to be cured by irradiation with ionizing radiation (ultraviolet light or electron beam). The photopolymerizable prepolymer, while can be used singly, is preferably used in combination with a photopolymerizable monomer and furthermore may be, if necessary, used together with auxiliary agent(s) such as a photopolymerization initiator, a photopolymerization promoter, and/or a sensitizer (for example, ultraviolet sensitizer), from the viewpoint of imparting or enhancing various performances, for example, an enhancement in crosslinking curability and adjustment of curing shrinkage.

A common photopolymerizable prepolymer is roughly classified to a cationic polymerization type and a radical polymerization type. Examples of the cationic polymerization type photopolymerizable prepolymer include an epoxy-based resin and a vinyl ether-based resin. Examples of the epoxy-based resin include a bisphenol-based epoxy resin, a novolac type epoxy resin, an alicyclic epoxy resin, and an aliphatic epoxy resin. Examples of the radical polymerization type photopolymerizable prepolymer include a (meth)acrylic prepolymer (hard prepolymer). Such a photopolymerizable prepolymer can be used singly or in combinations of two or more kinds thereof. In particular, a (meth)acrylic prepolymer (hard prepolymer) having two or more (meth)acryloyl groups in one molecule, which is to be crosslinked and cured to thereby have a three-dimensional network structure, is preferable from the viewpoint of hard coating ability.

Examples of the (meth)acrylic prepolymer include urethane (meth)acrylate, polyester (meth)acrylate, epoxy (meth)acrylate, melamine (meth)acrylate, polyfluoroalkyl (meth)acrylate, and silicone (meth)acrylate, but not particularly limited thereto. Such a (meth)acrylic prepolymer can be used singly or in combinations of two or more kinds thereof.

Examples of the urethane (meth)acrylate-based prepolymer include one obtained by esterifying a polyurethane oligomer obtained by a reaction of a polyether polyol or a polyester polyol with a polyisocyanate, according to a reaction with (meth)acrylic acid, but not particularly limited thereto. Such a urethane (meth)acrylate-based prepolymer can be used singly or in combinations of two or more kinds thereof.

Examples of the polyester (meth)acrylate-based prepolymer include one obtained by esterifying a hydroxyl group of a polyester oligomer having a hydroxyl group at each of both terminals, obtained by condensation of a polyvalent carboxylic acid and a polyhydric alcohol, with a (meth)acrylic acid, and one obtained by esterifying a hydroxyl group at a terminal of an oligomer obtained by addition of an alkylene oxide to a polyvalent carboxylic acid, with a (meth)acrylic acid, but not particularly limited thereto. Such a polyester (meth)acrylate-based prepolymer can be used singly or in combinations of two or more kinds thereof.

Examples of the epoxy (meth)acrylate-based prepolymer include one obtained by esterification due to a reaction of an oxirane ring of a bisphenol-based epoxy resin or a novolac type epoxy resin having a relatively low molecular weight, with a (meth)acrylic acid, but not particularly limited thereto. Such an epoxy (meth)acrylate-based prepolymer can be used singly or in combinations of two or more kinds thereof.

Examples of the photopolymerizable monomer include a monofunctional (meth)acrylic monomer (for example, 2-ethylhexyl (meth)acrylate, 2-hydroxyethyl (meth)acrylate, 2-hydroxypropyl (meth)acrylate, and butoxyethyl (meth)acrylate), a bifunctional (meth)acrylic monomer (for example, 1,6-hexanediol di(meth)acrylate, neopentyl glycol di(meth)acrylate, diethylene glycol di(meth)acrylate, polyethylene glycol di(meth)acrylate, and hydroxypivalic acid ester neopentyl glycol di(meth)acrylate), and a tri- or higher functional (meth)acrylic monomer (for example, dipentaerythritol hexa(meth)acrylate, trimethylpropane tri(meth)acrylate, and pentaerythritol tri(meth)acrylate), but not particularly limited thereto. Such a photopolymerizable monomer can be used singly or in combinations of two or more kinds thereof. The concept "(meth)acrylate" herein encompasses both acrylate and methacrylate.

In particular, a polyester (meth)acrylate-based prepolymer or urethane (meth)acrylate is preferable. A commercially available product of the polyester (meth)acrylate-based prepolymer or the urethane (meth)acrylate is not particularly limited, and examples include AT-600, UA-1011, UA-306H, UA-306T, UA-3061, UF-8001, and UF-8003 manufactured by Kyoeisha Chemical Co., Ltd., UV7550B, UV-7600B, UV-1700B, UV-6300B, UV-7605B, UV-7640B, and UV-7650B manufactured by Nihon Gosei Kako Co., Ltd., U-4HA, U-6HA, UA-100H, U-6LPA, U-15HA, UA-32P, U-324A, U-2PPA, and UA-NDP manufactured by Shin-Nakamura Chemical Co., Ltd., Ebecryl-270, Ebecryl-284, Ebecryl-264, Ebecryl-9260, Ebecryl-1290, Ebecryl-1290K, and Ebecryl-5129 manufactured by Daicel UCB Co., Ltd., UN-3220HA, UN-3220HB, UN-3220HC, and UN-3220HS manufactured by Negami Chemical Industrial Co., Ltd., RQ series manufactured by Mitsubishi Rayon Co., Ltd., and Beamset series manufactured by Arakawa Chemical Industries, Ltd.

The content of the above-mentioned polyester (meth)acrylate-based prepolymer or urethane (meth)acrylate is preferably 10 to 90% by mass, more preferably 20 to 80% by mass based on 100% by mass of the total amount of the solid content of the curable resin composition for forming the hard coating layer 21.

The content of a monomer including four or more polymerizable functional groups in its molecule (provided that the polyester (meth)acrylate-based prepolymer or the urethane (meth)acrylate is not included) is preferably 60% by mass or less, more preferably 50% by mass or less, particularly preferably 40% by mass or less based on 100% by mass of the total amount of the solid content of a curable composition for forming the hard coating layer 21.

Such a polymerizable functional group is not particularly limited, and examples thereof include an acryloyl group, a methacryloyl group, an acryloyloxy group, a methacryloyloxy group, a vinyl group, and an allyl group.

The monomer including four or more polymerizable functional groups in its molecule is not particularly limited, and examples thereof include pentaerythritol tetra(meth)acrylate, dipentaerythritol tetra(meth)acrylate, dipentaerythritol penta(meth)acrylate, dipentaerythritol hexa(meth)acrylate, and tripentaerythritol hexatri(meth)acrylate.

It is preferable to contain a monomer or oligomer including 1 to 3 polymerizable functional groups in its molecule, in addition to the above-mentioned polyester (meth)acrylate-based prepolymer or urethane (meth)acrylate.

The monomer or oligomer including 1 to 3 polymerizable functional groups in its molecule is not particularly limited, and examples thereof include methyl (meth)acrylate, lauryl (meth)acrylate, ethoxydiethylene glycol (meth)acrylate, methoxytriethylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxy (meth)acrylate, neopentyl glycol di(meth)acrylate, 1,6-hexanediol di(meth)acrylate, trimethylolpropane tri(meth)acrylate, pentaerythritol tri(meth)acrylate, and dipentaerythritol tri(meth)acrylate.

The content of the monomer or oligomer including 1 to 3 polymerizable functional groups in its molecule is preferably in the range from 5 to 60% by mass, more preferably in the range from 10 to 50% by mass based on 100% by mass of the total amount of the solid content of a curable composition for forming the hard coating layer 21.

In a case where the photopolymerizable prepolymer and the photopolymerizable monomer are used in formation of the hard coating layer 21, a photopolymerization initiator is preferably used. Examples of the photopolymerization initiator, which is for use in the radical polymerization type photopolymerizable prepolymer and the photopolymerizable monomer, include acetophenone, benzophenone, Michler's ketone, benzoin, benzyl methyl ketal, benzoyl benzoate, hydroxycyclohexyl phenyl ketone, 2-methyl-1-(4-(methylthio)phenyl)-2-(4-morpholinyl)-1-propane, α-acyloxime ester, and a thioxanthene compound, but not particularly limited thereto. Examples of the photopolymerization initiator for the cationic polymerization type photopolymerizable prepolymer include a compound including an onium such as an aromatic sulfonium ion, an aromatic oxosulfonium ion, or an aromatic iodonium ion, and an anion of tetrafluoroborate hexafluorophosphate, hexafluoroantimonate, hexafluoroarsenate or the like, but not particularly limited thereto. Such an initiator can be used singly or in combinations of two or more kinds thereof.

The amount of the photopolymerization initiator compounded is not particularly limited, and may be appropriately set usually in the range from 0.2 to 10 parts by mass based on 100 parts by mass in total of the above-mentioned photopolymerizable prepolymer and photopolymerizable monomer. The amount of the photopolymerization initiator is herein added as one portion of the entire resin component included in the hard coating layer 21.

Examples of the photopolymerization promoter include p-dimethylaminobonzoic acid isoamyl ester and p-dimethylaminobonzoic acid ethyl ester. Examples of the ultraviolet sensitizer include n-butylamine, triethylamine, and tri-n-butyl phosphine, but not particularly limited thereto. Such promotor and sensitizer can be each used singly or in combinations of two or more kinds thereof.

The amount of such a photopolymerization promoter, as an auxiliary agent, and such an ultraviolet sensitizer, compounded, is not particularly limited, and may be appropriately set usually in the range from 0.2 to 10 parts by mass based on 100 parts by mass in total of the above-mentioned photopolymerizable prepolymer and photopolymerizable monomer.

(Inorganic oxide particle)

The hard coating layer 21 in the present embodiment contains at least 1 to 50 parts by mass of an inorganic oxide particle based on 100 parts by mass of the entire resin component included in the hard coating layer 21. The inorganic oxide particle is contained to thereby allow the entire laminated film to obtain an excellent percentage of elongation.

Examples of the inorganic oxide particle include an alumina particle, a silica particle, a titania particle, a zirconia particle, an antimony oxide particle, a tin oxide particle, a tantalum oxide particle, a zinc oxide particle, a cerium oxide particle, a lead oxide particle, and an indium oxide particle, but not particularly limited thereto. Such a particle can be used singly or in combinations of two or more kinds thereof. In particular, at least one selected from the group consisting of an alumina particle and a silica particle is preferable, and an alumina particle is more preferable.

The average particle size $D_{50}$ of the inorganic oxide particle is not particularly limited, and is preferably 1 to 1500 nm, more preferably 10 to 1000 nm, further preferably 15 to 300 nm, particularly preferably 20 to 150 nm, most preferably 30 to 100 nm. Such an inorganic oxide particle, having an average particle size $D_{50}$ in the above-mentioned range, is used to result in a tendency to allow the laminated film to exhibit an excellent percentage of elongation of the entire laminated film.

The average particle size $D_{50}$ herein means a median size ($D_{50}$) measured with a laser diffraction type particle size distribution measurement apparatus (for example, trade name "SALD-7000" manufactured by Shimadzu Corporation). The median size ($D_{50}$) means a particle size at a cumulative amount of 50% by volume, as calculated from a smaller particle size, in terms of amount of particle in a particle distribution.

The content of the inorganic oxide particle is preferably 1 to 50 parts by mass, more preferably 1 to 25 parts by mass, further preferably 1 to 10 parts by mass, particularly preferably 1 to 5 parts by mass based on 100 parts by mass of the entire resin component included in the hard coating layer 21. Such an inorganic oxide particle at any content in the above-mentioned range is used to result in a tendency to allow the laminated film to exhibit an excellent percentage of elongation and excellent hard coating ability.

The hard coating layer 21 may contain various additives as long as the effects of the present invention are not excessively impaired. Examples of such various additives include a surface conditioner, a lubricant, a colorant, a pigment, a dye, a fluorescent whitener, a flame retardant, an antibacterial agent, a mildew-proofing agent, an ultraviolet absorber, a light stabilizer, a thermal stabilizer, an antioxidant, a plasticizer, a leveling agent, a fluidity controlling agent, a defoaming agent, a dispersant, a storage stabilizer, a crosslinking agent, and a silane coupling agent, but not particularly limited thereto.

The surface hardness of the hard coating layer 21 is not particularly limited, and is preferably HB or more, more preferably F or more, further preferably H or more. The value of the surface hardness is herein shown as a pencil scratching value (pencil hardness) measured at a load of 750 g by a method according to JIS K5600-5-4:1999.

The refractive index $n_2$ of the hard coating layer 21 can be appropriately set, is not particularly limited, and is preferably 1.35 to 1.70, more preferably 1.45 to 1.70.

The thickness of the hard coating layer 21 can be appropriately set, is not particularly limited, and is preferably 0.5 to 5 $\mu$m, more preferably 1 to 4 $\mu$m, further preferably 2 to 4 $\mu$m.

<Functional layer>

The functional layer 31 is described. The functional layer 31 is a layer provided for an increase in function of the laminated film 101 for molding, for example, for enhancements in, for example, surface smoothness, surface hardness, scratch resistance, antifouling properties, and optical characteristics. The functional layer 31 here used can be any known one for use in a laminated film. Specific examples include an antireflection layer, an antifouling layer, an antiglare layer, decorative layer, an anti-fingerprint layer, an antiblocking layer, an ultraviolet absorption layer, and an anti-Newton ring layer, but not particularly limited thereto. The functional layer 31 may be a single layer having any one of such functions, a single layer where a plurality of such functions are mixed, or a composite where a plurality of layers are laminated. The functional layer 31 is preferably at least one selected from the group consisting of an antireflection layer, an antifouling layer, an antiglare layer, and a decorative layer, more preferably an antireflection layer.

The functional layer 31 preferably contains a resin. The resin here used can be any of resins cited in the description of the above-mentioned hard coating layer 21, and a fluororesin or a silicon-based resin may also be used.

The functional layer 31 preferably contains 1 to 100% by mass of an inorganic oxide relative to all components included in the functional layer 31. Examples of the inorganic oxide include silicon oxide, aluminum oxide, titanium oxide, zirconium oxide, antimony oxide, tin oxide, tantalum oxide, zinc oxide, cerium oxide, lead oxide, and indium oxide, but not particularly limited. In particular, silicon oxide or aluminum oxide is preferable, and silicon oxide is more preferable.

The content of the inorganic oxide is preferably 1 to 100% by mass, more preferably 20 to 80% by mass, further preferably 30 to 60% by mass. The content of the inorganic oxide is in the above-mentioned range to result in a tendency to allow the laminated film 101 for molding to exhibit a more remarkably excellent percentage of elongation of the entire laminated film.

(Antireflection layer)

The antireflection layer is provided in order to decrease reflection on a surface portion of the hard coating layer 21 and enhance the total light transmittance of the entire laminated film 101 for molding. It is also considered that the hard coating layer 21 is designed to have a low refractive index in order that the reflection on such a surface portion is prevented. However, the hard coating layer 21 is designed to have a low refractive index to thereby sometimes cause the hard coating layer 21 to be deteriorated in hard coating ability. In the present embodiment, an antireflection layer having a lower refractive index than the refractive index of the hard coating layer 21 is formed on a surface of the hard coating layer 21 in order that the reflection on such a surface portion is prevented without any deterioration in hard coating ability of the hard coating layer 21. The antireflection layer in the present embodiment preferably has a lower refractive index than the refractive index of the hard coating layer 21.

The antireflection layer includes, for example, a resin or an inorganic oxide. The resin here used can be any of resins cited in the description of the above-mentioned hard coating layer 21, and a fluororesin or a silicon-based resin is preferably included in a case where antifouling properties and adjustment of the refractive index are required. In a case where the antireflection layer includes a resin, an inorganic oxide particle is preferably further included. In a case where the antireflection layer includes an inorganic oxide, any inorganic oxide particle different in type may be further included. The inorganic oxide particle may be the above-mentioned inorganic oxide particle.

Examples of the fluororesin include a fluorine-containing monomer, a fluorine-containing oligomer, and a fluorine-containing polymer compound. The fluorine-containing monomer and the fluorine-containing oligomer are each a monomer or an oligomer having an ethylenically unsaturated group and a fluorine atom in its molecule.

Examples of the fluorine-containing monomer and the fluorine-containing oligomer include fluorine-containing (meth)acrylic acid ester compounds (for example, 2,2,2-trifluoroethyl (meth)acrylate, 2,2,3,3,3-pentafluoropropyl (meth)acrylate, 2-(perfluorobutyl)ethyl (meth)acrylate, 2-(perfluorohexyl)ethyl (meth)acrylate, 2-(perfluorooctyl)ethyl (meth)acrylate, 2-(perfluorodecyl)ethyl (meth)acrylate, and $\beta$-(perfluorooctyl)ethyl (meth)acrylate), and di-($\alpha$-fluoroacrylic acid) fluoroalkyl ester compounds (for example, di-($\alpha$-fluoroacrylic acid)-2,2,2-trifluoroethyl ethylene glycol, di-($\alpha$-fluoroacrylic acid)-2,2,3,3,3-pentafluoropropyl ethylene glycol, di-($\alpha$-fluoroacrylic acid)-2,2,3,3,4,4,4-hexafluorobutyl ethylene glycol, di-($\alpha$-fluoroacrylic acid)-2,2,3,3,4,4,5,5,5-nonafluoropentylethylene glycol, di-($\alpha$-fluoroacrylic acid)-2,2,3,3,4,4,5,5,6,6,6-undecafluorohexyl ethylene glycol, di-($\alpha$-fluoroacrylic acid)-2,2,3,3,4,4,5,5,6,6,7,7,7-tridecafluoroheptylethylene glycol, di-($\alpha$-fluoroacrylic acid)-2,2,3,3,4,4,5,5,6,6,7,7,8,8,8-pentadecafluorooctylethylene glycol, di-($\alpha$-fluoroacrylic acid)-3,3,4,4,5,5,6,6,7,7,8,8,8-tridecafluorooctylethylene glycol, and di-($\alpha$-fluoroacrylic acid)-2,2,3,3,4,4,5,5,6,6,7,7,8,8,9,9,9-heptadecafluorononylethylene glycol).

Examples of the fluorine-containing polymer compound include a fluorine-containing copolymer having a fluorine-containing monomer and a monomer for providing a crosslinkable group, as constituent units. Specific examples of such a fluorine-containing monomer unit include fluoroolefin compounds (for example, fluoroethylene, vinylidene fluoride, tetrafluoroethylene, hexafluoroethylene, hexafluoropropylene, and perfluoro-2,2-dimethyl-1,3-dioxole), partially or fully fluorinated alkyl ester derivatives of (meth)acrylic acid (for example, "Viscoat 6FM" (manufactured by Osaka Organic Chemical Industry Ltd.) and "M-2020" (manufactured by Daikin Industries, Ltd.)), and fully or partially fluorinated vinyl ether compounds. Examples of the monomer for providing a crosslinkable group include, in addition to a (meth)acrylate monomer having a crosslinkable functional group in its molecule in advance, such as glycidyl methacrylate, a (meth)acrylate monomer (for example, (meth)acrylic acid, methylol (meth)acrylate, hydroxyalkyl (meth)acrylate, and allyl acrylate) having a carboxyl group, a hydroxyl group, an amino group, and/or a sulfonic acid group.

In a case where the content of the fluororesin in the antireflection layer is 1% or more based on 100% by mass of the total amount of the resin solid content of the composition, the effect can be exerted.

Examples of the silicon-based resin include a polymer of a polysiloxane compound having an ethylenically unsaturated group. Specifically, a bi- or higher functional polysiloxane compound having an ethylenically unsaturated group at each of both terminals of a main chain of polysiloxane in its molecule is preferable, and in particular, a tri- or higher functional polysiloxane compound having one or more ethylenically unsaturated groups at each of both terminals of a main chain of polysiloxane and on a side chain of polysiloxane is more preferable. Examples of the ethylenically unsaturated group here include a vinyl group, an acrylic group, a (meth)acryloyl group, and a (meth)acryloyloxy group.

Examples of a commercially available product of the polysiloxane compound having an ethylenically unsaturated group include Silaplane FM-0711, Silaplane FM-0721, and Silaplane FM-0725 manufactured by Chisso Corporation, X-24-8201, X-22-174DX, X-22-1602, X22-1603, X-22-2426, X-22-2404, X-22-164A, X-22-164C, X-22-2458, X-22-2459, X-22-2445, and X-22-2457 manufactured by Shin-Etsu Chemical Co., Ltd., BY16-152D, BY16-152, BY16-152C manufactured by Dow Corning Toray Co., Ltd., and BYK-UV3570 manufactured by BYK Japan KK.

The content of the silicon-based resin in the antireflection layer is preferably 1.5% by mass or more and less than 10% by mass based on 100% by mass of the total amount of the solid content of the low refractive index layer.

The inorganic oxide included in the antireflection layer may be an inorganic oxide sol. Examples of the inorganic oxide sol include silica sol and alumina sol. Among such inorganic oxide sols, silica sol is suitably used from the viewpoint of the refractive index, fluidity, and cost. The inorganic oxide sol refers to a material in which no Tyndall phenomenon cannot be observed due to the presence of the inorganic oxide, and refers to a so-called homogeneous solution. For example, even a material commonly called colloidal silica sol, in which a Tyndall phenomenon is observed, is not encompassed in the inorganic oxide sol in this embodiment.

Such an inorganic oxide sol can be adjusted by hydrolyzing an inorganic alkoxide such as tetraethoxysilane, methyltrimethoxysilane, zirconia propoxide, aluminum isopropoxide, titanium butoxide, or titanium isopropoxide. Examples of the solvent of the inorganic oxide sol include methanol, ethanol, isopropanol, butanol, acetone, and 1,4-dioxane.

The inorganic oxide particle is preferably the above-mentioned inorganic oxide finely powdered, and examples include a silica particle and an alumina particle. In particular, a silica particle is suitably used from the viewpoint of the refractive index, fluidity, and cost. The shape of the inorganic oxide particle is not particularly limited, and a porous or hollow inorganic oxide particle low in refractive index is suitably used.

The thickness of the antireflection layer preferably satisfies the following expression according to the antireflection theory of light.

$$d = (a + 1) \lambda/4n_3$$

Herein, d is the thickness (unit: "nm") of the antireflection layer, a is 0 or a positive even number, $\lambda$ is the central wavelength of light whose reflection is to be prevented, and $n_3$ is the refractive index of the antireflection layer. Specifically, d is, for example, preferably about 2000 nm or less, more preferably 1000 nm or less, further preferably 800 nm or less, particularly preferably 500 nm or less, most preferably 300 nm or less. The central wavelength of light whose reflection is to be prevented is in the visual light range, and thus the refractive index n is about 1.40 and the thickness d of the antireflection layer is thus about 100 nm in a case where $\lambda$ is 550 nm generally referred to as the central wavelength of wavelengths in the visual light range and silicon oxide is used in the inorganic thin film.

An increased thickness of the antireflection layer hardly causes the occurrence of the variation in interference due to the variation in thickness, but hardly allows hard coating ability of the hard coating layer 21 provided on a lower surface to be exhibited. In this embodiment, the antireflection layer is thinly formed on a surface of the hard coating layer 21 in order to prevent deterioration in hard coating ability of the hard coating layer 21 and deterioration in antireflection effect due to light interference.

The refractive index $n_3$ of the antireflection layer is preferably 1.20 to 1.47, more preferably 1.20 to 1.45. The refractive index $n_3$ of the antireflection layer in the laminated film 101 for molding of the present embodiment is preferably smaller than the refractive index $n_2$ of the hard coating layer 21, more preferably smaller than the refractive index $n_2$ of the hard coating layer 21, by 0.1 or more.

The laminated film 101 for molding, described above in detail, can be obtained by, for example, forming the hard coating layer 21 on one surface 11a of the substrate film 11 and then laminating and forming the functional layer 31 on the surface 21a of the hard coating layer 21. The method for forming such each layer may be performed according to an ordinary method, and is not particularly limited. Examples of suitable methods for producing the hard coating layer 21 and the functional layer 31 include conventionally known coating methods such as doctor coating, dip coating, roll coating, bar coating, die coating, blade coating, air knife coating, kiss coating, spray coating, and spin coating. The solvent of the coating liquid, here used, can be one known in the art, for example, water; a ketone-based solvent such as methyl ethyl ketone, methyl isobutyl ketone, or cyclohexanone; an ester-based solvent such as methyl acetate, ethyl acetate, or butyl acetate; an ether-based solvent such as methyl cellosolve or ethyl cellosolve; an alcohol-based solvent such as methyl alcohol, ethyl alcohol, or isopropyl alcohol, or a mixed solvent thereof. The coating film obtained by such coating can be, if necessary, subjected to, for example, an ionizing radiation treatment, a heat treatment, and/or a pressure treatment to thereby form the hard coating layer 21 and the functional layer 31. Herein, for example, an anchor treatment and/or a corona treatment can also be, if necessary, performed as a pre-treatment before lamination of each of the layers.

A light source for use in irradiation with ionizing radiation is not particularly limited. For example, a super high-pressure mercury lamp, a high-pressure mercury lamp, a medium-pressure mercury lamp, a low-pressure mercury lamp, a carbon-arc lamp, a metal halide lamp, a xenon lamp, or an electron beam accelerator can be used. The amount of irradiation here can also be appropriately set depending on the type, output performance, and the like of the light source used, and is not particularly limited, and the amount of irradiation with ultraviolet light is generally a cumulative amount of light of about 100 to 6,000 mJ/cm$^2$, as a target.

A heat source for use in the heat treatment is also not particularly limited. Any of a contact system or a non-contact system can be suitably used. For example, a far-infrared heater, a short wavelength infrared heater, a medium wavelength infrared heater, a carbon heater, an oven, or a heat roller can be used. The treatment temperature in the heat treatment is not particularly limited, and is generally 80 to 200°C, preferably 100 to 150°C.

<Physical properties of laminated film for molding>

The total light transmittance in the laminated film 101 for molding of the present embodiment is preferably 80% or more, more preferably 85 to 99%, further preferably 90 to 98%. The total light transmittance can be measured by a method according to JIS K7361-1:1997.

The haze in the laminated film 101 for molding of the present embodiment is, for example, preferably 6% or more in an application where antiglare properties are demanded. On the other hand, the haze is preferably 5% or less, more preferably 0.01 to 3%, further preferably 0.1 to 1% in an application where transparency is demanded. The haze can be measured by a method according to JIS K7136:2000.

The arithmetic average roughness (Ra) of the outermost surface in the laminated film 101 for molding of the present embodiment is preferably 120 nm or less, more preferably 0.1 to 50 nm, further preferably 0.1 to 10 nm, still further preferably 0.1 to 5 nm. The arithmetic average roughness (Ra) can be measured by a method according to JIS B0601:2001.

The laminated film 101 for molding of the present embodiment can be used in, for example, decoration molding, in-mold molding, or film insert molding. The laminated film 101 for molding of the present embodiment exhibits an excellent percentage of elongation of the entire laminated film, and thus has a particular advantage over the prior art because of hardly causing cracking even in a 90° bending test at a small radius of curvature (for example, about 1 mm) and being excellent in shape followability of the entire laminated film.

The percentage of elongation of the laminated film 101 for molding of the present embodiment is preferably 5% or more, more preferably 10 to 200%, further preferably 30 to 150%, particularly preferably 40 to 100%. The laminated film 101 for molding, which satisfies the range, tends to exhibit an excellent percentage of elongation and exhibit excellent hard coating ability. A preferable molding application is an application where the above-mentioned percentage of elongation is demanded.

The percentage of elongation can be measured by a method according to JIS K7127:1999, more specifically, can be measured by a method described in Examples. In a case where the percentage of elongation of the laminated film 101 for molding, where the hard coating layer 21 and the like are laminated on the substrate film 11, is measured, the substrate film 11 may be broken in measurement in a temperature condition considerably below the glass transition temperature of the substrate film 11. In such a case, an accurate percentage of elongation can be measured by warming the laminated film 101 for molding to a temperature around the glass transition temperature of the substrate film 11, suitably to a temperature within ±5°C of the glass transition temperature.

The laminated film 101 for molding of the present embodiment is suitably used in an exterior film of a housing of electronic equipment such as a mobile phone or a laptop computer, an icon sheet of a mobile phone, and a protection film of an in-vehicle display panel. In particular, the laminated film is particularly useful in a protection film of a display device such as a cathode-ray tube (CRT), a plasma display (PDP), a liquid crystal display (LCD), or an electroluminescence display (OELD or IELD).

[Examples]

Hereinafter, the present invention will be specifically described based on experiments, but the present invention is not limited thereto at all. In the present invention, various conditions can be adopted without departing from the gist of the present invention, as long as the objects of the present invention are achieved. Hereinafter, "part(s)" represents "part(s) by mass", unless particularly noted.

[Measurement method]

<Total light transmittance and haze>

The total light transmittance (Tt) and the haze (Haze) were each measured by a haze meter "NDH2000" (trade name, manufactured by Nippon Denshoku Industries Co., Ltd.) with a surface of each of the laminated films for molding, the surface being located opposite to the substrate, as a light incident surface, in which the total light transmittance (Tt) was measured by a measurement method according to JIS K7361-1:1997 and the haze (Haze) was measured by a measurement method according to JIS K7136:2000.

<Arithmetic average roughness (Ra)>

The arithmetic average roughness (Ra) of each of the laminated films for molding was determined with an atomic force microscope "Nanocute System" (trade name, manufactured by Hitachi High-Tech Science Corporation, probe: Si single-crystal probe, measurement mode: DFM mode, image treatment: flat treatment (XY) once) by a measurement method according to JIS B0601:2001.

[Evaluation method]

<Percentage of elongation>

The percentage of elongation of each of the films was measured by performing a tensile test according to JIS K7127:1999, as evaluation of shape followability. A sample was produced by cutting a strip of 100 mm in length × 25 mm in width. Next, marking at a length interval of 50 mm was performed around the central portion of the sample, except for both ends, the sample was placed on an apparatus with a temperature regulation mechanism placed on a tensile tester "AGS-1kNX" (trade name, manufactured by Shimadzu Corporation) so that such a marking portion was not sandwiched between chucks, the temperature was set within ±5°C of the glass transition temperature of the substrate, the tensile test was performed at a distance between the chucks, of 50 mm, and at a tensile speed of 200 mm/min, and the length of marking upon cracking of the sample was measured and divided by a length of 50 mm as the initial marking, thereby calculating the percentage (%) of elongation. The presence of cracking was visually confirmed.

<Pencil hardness>

The pencil hardness was measured by use of a pencil scratching hardness tester "No.553-m" (trade name, manufactured by Yasuda Seiki Seisakusho, Ltd.) according to JIS K5600-5-4:1999, as evaluation of hard coating ability. Three lines were drawn on the outermost surface (surface opposite to the substrate film) of each of the laminated films for molding by a pencil having a predetermined hardness and cracking was confirmed in measurement conditions of a load of 750 g and a rate of scratching of 0.5 mm/sec, and the maximum hardness (B, HB, F, or H) upon cracking of one or less of the lines was evaluated. Each of the pencil hardness tests in Table 2 and Table 3 was performed after formation of the hard coating layer and before formation of the functional layer, and after formation of the functional layer. The evaluations after formation of the hard coating layer and before formation of the functional layer were each represented in the column "Only HC layer" and the evaluation after formation of the functional layer was represented in the column "Entire laminated film", in the Tables.

<Chemical resistance>

The outermost surface (surface opposite to the substrate film) of each of the laminated films for molding was coated with 0.3 g of sunscreen cream "SPF100+" (trade name, manufactured by Neutrogena), the resultant was aged at 80°C for 6 hours, thereafter the cream was cleansed by water, and the change in appearance was visually confirmed.

5: the change in appearance was not observed at all.
4: the change in appearance was slightly observed depending on the angle of application of light.
3: the change in appearance was slightly observed.
2: the change in appearance was observed.
1: the change in appearance was clearly observed.

<Scratch resistance>

The scratch resistance was evaluated with a melamine sponge "Gekiochikun" (trade name, melamine foam manufactured by LEC Inc.), as evaluation of hard coating ability. The outermost surface (surface opposite to the substrate film) of each of the laminated films for molding was here scratched 30 times by a load having an installation area of 7 cm$^2$ and a weight of 200 g, and thereafter the presence of scratching was visually confirmed.

  5: no change
  4: one to two thin scratches were confirmed
  3: three to ten thin scratches were confirmed
  2: ten or more thin scratches were confirmed
  1: any sharp scratch was confirmed on the entire surface scratched

[Production of laminated film for molding]

(Example 1: laminated film E1 for molding)

One surface of a polycarbonate film having a thickness of 250 $\mu$m and a glass transition temperature of 150°C was coated with a coating liquid for a hard coating layer, including an inorganic oxide particle at a content shown in Table 1 and having the following formulation, and the resultant was dried and then irradiated with ultraviolet light and thus cured, thereby forming a hard coating layer (hereinafter, also referred to as "HC layer") having a thickness of 3 $\mu$m and a refractive index of 1.52. Thereafter, the hard coating layer was coated with a coating liquid for a functional layer, having the following formulation, and the resultant was dried and then irradiated with ultraviolet light and thus cured, to thereby form an antireflection layer having a thickness of 100 nm and a refractive index of 1.37, as a functional layer, thereby obtaining laminated film E1 for molding. The obtained laminated film E1 for molding was evaluated about the percentage of elongation, the pencil hardness, the chemical resistance, and the scratch resistance. The results are shown in Table 1.

(Comparative Example 1: laminated film CE1 for molding)

Laminated film CE1 for molding was obtained by forming a hard coating layer and an antireflection layer in the same manner as in Example 1 except that compounding of the inorganic oxide particle in formation of the hard coating layer was omitted. Laminated film CE1 for molding, obtained, was evaluated about the percentage of elongation, the pencil hardness, the chemical resistance, and the scratch resistance. The results are shown in Table 1.

(Reference Examples 1 to 3: laminated films R1 to R3 for molding)

Each laminated film for molding was obtained by forming each hard coating layer in the same manner as in Example 1 except that no functional layer was formed and the content of the inorganic oxide particle in formation of the hard coating layer was changed as shown in Table 1. Such each laminated film for molding was evaluated about the percentage of elongation, the pencil hardness, the chemical resistance, and the scratch resistance. The results are shown in Table 1.

<Coating liquid for hard coating layer>

Acrylic ultraviolet curing type resin: 167 parts by mass (solid content: 100 parts by mass)
(trade name: Beamset 1200, manufactured by Arakawa Chemical Industries, Ltd., solid content 60% by mass)
Inorganic oxide particle A-1: amount (parts by mass) described in Table
(alumina particle, average particle size $D_{50}$: 80 nm, solid content 100% by mass)
Inorganic oxide particle A-2: amount (parts by mass) described in Table
(alumina particle, average particle size $D_{50}$: 900 nm, solid content 100% by mass)
Inorganic oxide particle B: amount (parts by mass) described in Table
(silica particle, average particle size $D_{50}$: 250 nm, solid content 100% by mass)
Leveling agent: 2 parts by mass
(trade name: M-ADDITIVE, manufactured by Dow Corning Toray Co., Ltd., solid content 10% by mass)
Solvent: adjusted so that the solid content was 20% by mass

(methyl ethyl ketone (MEK))

<Coating liquid for functional layer>

Ionizing radiation-curable resin: 50 parts by mass (trade name: Beamset 575, manufactured by Arakawa Chemical Industries, Ltd., solid content 100% by mass)
Multifunctional acrylate: 50 parts by mass (trimethylolpropane triacrylate (TMPTA), solid content 100% by mass)
Photoinitiator: 3 parts by mass
(trade name: Omnirad 127, manufactured by IGM Resins B.V., solid content 100% by mass)
Porous silica fine particle: 100 parts by mass (average particle size $D_{50}$: 55 nm, solid content 100% by mass)
Additive: 3 parts by mass
(trade name: Megafac RS-75, manufactured by DIC Corporation, solid content 40% by mass)
Solvent: adjusted so that the solid content of the coating liquid for a functional layer was 6% by mass (methyl ethyl ketone (MEK))

[Table 1]

Table 1

| | | | Comparative Example 1 | Example 1 | Reference Example 1 | Reference Example 2 | Reference Example 3 |
|---|---|---|---|---|---|---|---|
| Laminated film for molding | | | CE1 | E1 | R1 | R2 | R3 |
| Antireflection layer | | | Presence | Presence | Absence | Absence | Absence |
| HC layer | Inorganic oxide particle | Type | - | A-1 | - | A-1 | A-1 |
| | | Average particle size ($D_{50}$)(nm) | - | 80 | - | 80 | 80 |
| | | Amount (parts by mass)*1 | 0 | 1.4 | 0 | 1.4 | 2.8 |
| Physical properties of laminated film | Total light transmittance (%) | | 93 | 93 | 91 | 91 | 91 |
| | Haze (%) | | 0.7 | 0.5 | 0.4 | 0.9 | 0.6 |
| | Arithmetic average roughness (Ra) (nm) | | 2 | 2 | <1 | 3 | 5 |
| Evaluation | Percentage (%) of elongation | | 34 | 48 | 58 | 52 | 50 |
| | Pencil hardness | | F | H | HB | F | F |
| | Chemical resistance | | 5 | 5 | 4 | 4 | 4 |
| | Scratch resistance | | 4 | 5 | 2 | 3 | 3 |
| *1 Amount compounded based on 100 parts by mass of entire resin component included in HC layer | | | | | | | |

First, it was found from comparison among Reference Examples 1 to 3 that the laminated film for molding, where no antireflection layer was laminated, was allowed to contain the inorganic oxide particle in the hard coating layer and thus was decreased in percentage of elongation of the entire laminated film for molding, according to an increase in content of the inorganic oxide particle. On the other hand, it was found from comparison between Comparative Example 1 and Example 1 that the laminated film for molding, including the antireflection layer and the hard coating layer, was allowed to contain the inorganic oxide particle in the hard coating layer and thus was enhanced in percentage of elongation of the entire laminated film for molding, inconsistent with the results of Reference Examples 1 to 3 described above. It was again indicated from comparison between Comparative Example 1 and Example 1 that the laminated film for molding was allowed to contain the inorganic oxide particle in the hard coating layer and thus could be enhanced in scratch resistance of the laminated film.

(Examples 2 to 6: laminated films E2 to E6 for molding)

One surface of a polycarbonate film having a thickness of 250 $\mu$m and a glass transition temperature of 150°C was coated with a coating liquid for a hard coating layer, including an inorganic oxide particle at a content shown in Table 2 and having the above formulation, and the resultant was dried and then irradiated with ultraviolet light and thus cured, to thereby form a hard coating layer having a thickness of 3 $\mu$m and a refractive index of 1.52. Thereafter, the hard coating layer was coated with a coating liquid for an antireflection layer, having the above formulation, and the resultant was dried and then irradiated with ultraviolet light and thus cured, to thereby form an antireflection layer having a thickness of 100 nm and a refractive index of 1.37, thereby obtaining each of laminated films E2 to E6 for molding.

Each of the obtained laminated films E2 to 6 for molding was evaluated about the percentage of elongation, the pencil hardness, the chemical resistance, and the scratch resistance. The results are shown in Table 2. The respective results with respect to laminated films E1 and CE1 for molding, shown in Example 1 and Comparative Example 1, are also shown in Table 2 for reference.

[Table 2]

Table 2

| | | | Comparative Example 1 | Example 1 | Example 2 | Example 3 | Example 4 | Example 5 | Example 6 |
|---|---|---|---|---|---|---|---|---|---|
| Laminated film for molding | | | CE1 | E1 | E2 | E3 | E4 | E5 | E6 |
| Antireflection layer | | | Presence | Presence | Presence | Presence | Presence | Presence | Presence |
| HC layer | Inorganic oxide particle | Type | A-1 | A-1 | A-1 | A-1 | A-1 | A-1 | A-1 |
| | | Average particle size $(D_{50})$(nm) | 80 | 80 | 80 | 80 | 80 | 80 | 80 |
| | | Amount (parts by mass)*1 | 0 | 1.4 | 2.8 | 4.2 | 7.2 | 21.2 | 42.9 |
| Physical properties of laminated film | Total light transmittance (%) | | 93 | 93 | 93 | 93 | 93 | 93 | 93 |
| | Haze (%) | | 0.7 | 0.5 | 0.5 | 0.8 | 0.4 | 0.5 | 0.7 |
| | Arithmetic average roughness (Ra) (nm) | | 2 | 2 | 2 | 2 | 2 | 2 | 2 |
| Evaluation | Percentage (%) of elongation | | 34 | 48 | 50 | 52 | 42 | 42 | 36 |
| | Pencil hardness | Only HC layer | HB | F | F | F | F | F | H |
| | | Entire laminated film | F | H | H | H | H | H | H |
| | Chemical resistance | | 5 | 5 | 5 | 5 | 4.5 | 4.5 | 4.5 |
| | Scratch resistance | | 4 | 5 | 5 | 5 | 5 | 5 | 5 |
| *1 Amount compounded based on 100 parts by mass of entire resin component included in HC layer | | | | | | | | | |

As described above, it was indicated from the results of comparison between Examples 1 to 6 and Comparative Example 1 that a laminated film excellent in all performances of the percentage of elongation, the pencil hardness, the chemical resistance and the scratch resistance could be realized by allowing the hard coating layer to contain the inorganic oxide particle.

(Examples 11 to 15 and Comparative Example 2: laminated films E11 to E15 and CE2 for molding)

One surface of a polycarbonate film having a thickness of 250 $\mu$m and a glass transition temperature of 150°C was coated with a coating liquid for a hard coating layer, including an inorganic oxide particle at a content shown in Table 3 and having the above formulation, and the resultant was dried and then irradiated with ultraviolet light and thus cured, to thereby form a hard coating layer having a thickness of 3 $\mu$m and a refractive index of 1.52. Thereafter, the hard coating layer was coated with a coating liquid for an antireflection layer, having the above formulation, and the resultant was dried and then irradiated with ultraviolet light and thus cured, to thereby form an antireflection layer having a thickness of 100 nm and a refractive index of 1.37, thereby obtaining each of laminated films E11 to E15 for molding.

In Comparative Example 2, laminated film CE2 for molding was obtained by forming a hard coating layer and an antireflection layer in the same manner as in Example 11 except that compounding of the inorganic oxide particle in formation of the hard coating layer was omitted.

Each of laminated films E11 toE15 and CE2 for molding, obtained, was evaluated about the percentage of elongation, the pencil hardness, the chemical resistance, and the scratch resistance. The results are shown in Table 3.

[Table 3]

Table 3

| | | | Comparative Example 2 | Example 11 | Example 12 | Example 13 | Example 14 | Example 15 |
|---|---|---|---|---|---|---|---|---|
| Laminated film for molding | | | CE2 | E11 | E12 | E13 | E14 | E15 |
| Antireflection layer | | | Presence | Presence | Presence | Presence | Presence | Presence |
| HC layer | Inorganic oxide particle | Type | A-2 | A-2 | A-2 | A-2 | A-2 | A-2 |
| | | Average particle size ($D_{50}$)(nm) | 900 | 900 | 900 | 900 | 900 | 900 |
| | | Amount (parts by mass)*1 | 0 | 1.4 | 2.8 | 4.2 | 7.2 | 21.2 |
| Physical properties of laminated film | Total light transmittance (%) | | 93 | 93 | 93 | 93 | 93 | 93 |
| | Haze (%) | | 0.7 | 2.7 | 4.9 | 7.2 | 10.9 | 28.0 |
| | Arithmetic average roughness (Ra) (nm) | | 2 | 3 | 23 | 33 | 47 | 118 |
| Evaluation | Percentage (%) of elongation | | 34 | 48 | 50 | 50 | 42 | 40 |
| | Pencil hardness | Only HC layer | HB | F | F | F | F | F |
| | | Entire laminated film | F | H | H | H | H | H |
| | Chemical resistance | | 5 | 4 | 3.5 | 3 | 3 | 3 |
| | Scratch resistance | | 4 | 5 | 5 | 4 | 4 | 4 |
| *1 Amount compounded based on 100 parts by mass of entire resin component included in HC layer | | | | | | | | |

EP 3 950 342 A1

16

It was found from comparison between Comparative Example 2 and Examples 11 to 15 that the laminated film for molding, including the antireflection layer and the hard coating layer, was allowed to contain the inorganic oxide particle having an average particle size $D_{50}$ of 900 nm in the hard coating layer and thus enhanced in percentage of elongation of the entire laminated film for molding, as in the results of Table 1 and Table 2.

On the other hand, it was indicated from comparison between Examples 1 to 6 and Examples 11 to 15 that a high content of the inorganic oxide particle resulted in a tendency to increase the influence due to the difference in average particle size $D_{50}$ of the inorganic oxide particle and use of the inorganic oxide particle having a smaller average particle size $D_{50}$ resulted in a tendency to more enhance the percentage of elongation of the entire laminated film. It was also indicated from comparison between Examples 1 to 6 and Examples 11 to 15 that use of the inorganic oxide particle having a smaller average particle size $D_{50}$ resulted in a tendency to suppress a rise in haze of the laminated film.

(Examples 21 to 22: laminated films E21 to E22 for molding)

Each of laminated films E21 and E22 for molding of Examples 21 to 22 was obtained with the same formulation and production method as in Example 1 except that the type and the amount of the inorganic oxide particle compounded were changed as described in Table 4. Each of laminated films E21 and E22 for molding, obtained, was evaluated. The results are shown in Table 4.

[Table 4]

Table 4

| | | | Example 21 | Example 22 |
|---|---|---|---|---|
| Laminated film | | | E21 | E22 |
| Antireflection layer | | | Presence | Presence |
| HC layer | Inorganic oxide particle | Type | B | B |
| | | Average particle size ($D_{50}$)(nm) | 250 | 250 |
| | | Amount (parts by mass)*1 | 5 | 10 |
| Evaluation | Percentage (%) of elongation | | 48 | 42 |
| | Pencil hardness | | H | H |
| | Chemical resistance | | 4 | 4 |
| | Scratch resistance | | 5 | 5 |
| *1 Amount compounded based on 100 parts by mass of entire resin component included in HC layer | | | | |

It was indicated that, even in a case where a silica particle was used as the inorganic oxide particle, a laminated film for molding could be realized which had excellent performances of all the percentage of elongation, the pencil hardness, the chemical resistance and the scratch resistance, comparable with those of a laminated film for molding, using an alumina particle.

[Industrial Applicability]

The present invention is suitably used in an exterior film of a housing of electronic equipment such as a mobile phone or a laptop computer, an icon sheet of a mobile phone, and a protection film of an in-vehicle display panel. In particular, it is particularly useful in a protection film of a display device such as a cathode-ray tube (CRT), a plasma display (PDP), a liquid crystal display (LCD), or an electroluminescence display (OELD or IELD).

[Reference Signs List]

101 ... laminated film for molding, 11 ... substrate film, 21 ... hard coating layer, 31 ... functional layer

**Claims**

1. A laminated film for molding, comprising at least a substrate film, a hard coating layer, and a functional layer in the listed order, wherein
the hard coating layer comprises at least a resin and 1 to 50 parts by mass of an inorganic oxide particle based on 100 parts by mass of the entire resin component comprised in the hard coating layer.

2. The laminated film for molding according to claim 1, wherein the inorganic oxide particle has an average particle size $D_{50}$ of 1 to 1500 nm.

3. The laminated film for molding according to claim 1 or 2, wherein the hard coating layer has a thickness of 0.5 to 5 $\mu$m.

4. The laminated film for molding according to any one of claims 1 to 3, wherein the inorganic oxide particle comprises one selected from the group consisting of an alumina particle and a silica particle.

5. The laminated film for molding according to any one of claims 1 to 4, wherein the hard coating layer has a pencil hardness of HB or more (according to JIS K5600-5-4:1999, at a load of 750 g).

6. The laminated film for molding according to any one of claims 1 to 5, wherein the substrate film, the hard coating layer, and the functional layer are laminated and disposed with no any other layer being interposed.

7. The laminated film for molding according to any one of claims 1 to 6, wherein the functional layer comprises a resin.

8. The laminated film for molding according to any one of claims 1 to 7, wherein the functional layer comprises 1 to 100% by mass of an inorganic oxide relative to all components comprised in the functional layer.

9. The laminated film for molding according to any one of claims 1 to 8, wherein the functional layer has a thickness of 20 to 200 nm.

10. The laminated film for molding according to any one of claims 1 to 9, wherein the functional layer is at least one selected from the group consisting of an antireflection layer, an antifouling layer, an antiglare layer, and a decorative layer.

11. The laminated film for molding according to any one of claims 1 to 10, for use in film insert molding.

[Figure 1]

## INTERNATIONAL SEARCH REPORT

| International application No. |
| --- |
| PCT/JP2020/009900 |

### A. CLASSIFICATION OF SUBJECT MATTER
Int. Cl. B32B27/20(2006.01)i, C08J7/046(2020.01)i
FI: B32B27/20 Z, C08J7/046 CFD

According to International Patent Classification (IPC) or to both national classification and IPC

### B. FIELDS SEARCHED
Minimum documentation searched (classification system followed by classification symbols)
Int. Cl. B32B27/20, C08J7/046

Documentation searched other than minimum documentation to the extent that such documents are included in the fields searched
Published examined utility model applications of Japan    1922-1996
Published unexamined utility model applications of Japan  1971-2020
Registered utility model specifications of Japan          1996-2020
Published registered utility model applications of Japan  1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2018-176536 A (NOF CORP.) 15 November 2018, in particular, claims, paragraphs [0034]-[0038], | 1-4, 6, 7, 9-11 |
| Y | [0045]-[0052], [0091]-[0117] (Family: none) | 5, 8 |
| X | JP 2018-180248 A (NOF CORP.) 15 November 2018, in particular, claims, paragraphs [0034]-[0038], | 1-4, 6, 7, 9-11 |
| Y | [0044]-[0074], [0081]-[0101] (Family: none) | 5 |
| Y | JP 2014-069523 A (NIPPON PAPER INDUSTRIES CO., LTD.) 21 April 2014, in particular, claims, paragraphs [0001], [0013]-[0016], [0025]-[0042] (Family: none) | 5 |

☒ Further documents are listed in the continuation of Box C.     ☐ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 22.05.2020 | 02.06.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2020/009900 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2015-152691 A (NOF CORP.) 24 August 2015, in particular, claims, paragraphs [0046]-[0082] (Family: none) | 8 |
| P, X | JP 2019-119206 A (HIGASHIYAMA FILM KK) 22 July 2019, in particular, claims, paragraphs [0019], [0024]-[0047], examples 8, 10, fig. 1 (Family: none) | 1-9 |

Form PCT/ISA/210 (continuation of second sheet) (January 2015)

**EP 3 950 342 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014041244 A